# FASCICULE DE BREVET EUROPEEN

(11) **EP 3 589 468 B1**
(45) Date de publication et mention de la délivrance du brevet: **31.03.2021**
(21) Numéro de dépôt: 18710090.4
(22) Date de dépôt: 19.02.2018
(51) Int. Cl.: B29B 11/16, B29D 99/00, F01D 5/28

(54) **PREFORME ET AUBE MONOBLOC POUR TURBOMACHINE**
VORFORM UND EINTEILIGE SCHAUFEL FÜR TURBOMASCHINE
PREFORM AND ONE-PIECE VANE FOR TURBOMACHINE

(30) Priorité: 01.03.2017 FR 1751667
(43) Date de publication de la demande: 08.01.2020
(73) Titulaire: Safran Aircraft Engines, 75015 Paris (FR)
(72) Inventeur: GUIVARC'H, Jérémy, 77550 Moissy-Cramayel cedex (FR); BOISSON, Alexandre, Bernard, Marie, 77550 Moissy-Cramayel cedex (FR); DE GAILLARD, Thomas, Alain, 77550 Moissy-Cramayel cedex (FR); NOTARIANNI, Gilles Pierre-Marie, 77550 Moissy-Cramayel cedex (FR)
(74) Mandataire: Cabinet Beau de Loménie
(86) Numéro de dépôt international: PCT/FR2018/050387
(87) Numéro de publication internationale: WO 2018/158522

(56) Documents cités:
- WO-A1-2016/066954
- WO-A1-2016/174343
- WO-A1-2016/174345
- WO-A1-2016/174346
- WO-A2-2013/104852
- FR-A1- 3 035 677
- FR-A1- 3 040 147

## Description

### DOMAINE DE L'INVENTION

Le présent exposé concerne une préforme fibreuse pour une aube de turbomachine ainsi qu'une aube monobloc formée au moyen d'une telle préforme, une soufflante et une turbomachine comprenant une telle aube.

Une telle préforme peut être utilisée pour réaliser en une seule pièce des aubes comprenant des plates-formes aérodynamiques. De telles aubes peuvent être notamment des aubes de soufflante d'un turboréacteur d'avion par exemple.

### ETAT DE LA TECHNIQUE ANTERIEURE

Un turboréacteur classique à double flux comporte une soufflante dont le flux est divisé entre un flux primaire, dirigé vers les compresseurs, la chambre de combustion puis les turbines de la turbomachine, et un flux secondaire de dilution fournissant une part essentielle de la poussée.

Afin de réduire la masse des turboréacteurs et le nombre de pièces les composant, il a été proposé, notamment dans la demande internationale WO 2013/104852, de réaliser par tissage 3D des aubes de soufflante en matériau composite intégrant de manière monobloc des plateformes. De telles aubes ont l'avantage d'offrir une très bonne liaison mécanique entre la partie de pale et les plateformes. Toutefois, la réalisation par tissage 3D d'une préforme fibreuse intégrant de manière monobloc les plateformes est compliquée. En effet, une telle configuration monobloc implique de réaliser des sorties de couches de fils importantes lors du tissage pour former les plateformes, y compris dans des zones où l'on souhaiterait pourtant conserver une épaisseur importante : ainsi, le tissage simultané de plateformes entraine des contraintes de dessin et de conception de la partie de pale qui limitent l'optimisation, en particulier aérodynamique, de la partie de pale.

On connaît par ailleurs d'autres techniques selon lesquelles les plateformes d'une part et le corps de l'aube d'autre part (incluant essentiellement le pied d'aube et la partie de pale) sont tissés séparément, les plateformes étant ensuite rapportées sur la préforme principale avant ou pendant l'injection de la matrice. Grâce à de telles techniques, il est possible de dessiner et concevoir totalement librement la partie de pale afin d'optimiser beaucoup plus facilement ses fonctions, en particulier aérodynamique. En revanche, la liaison mécanique entre les plateformes et le corps de l'aube est plus faible puisqu'aucune liaison textile ne connecte les plateformes au corps de l'aube.

Il existe donc un réel besoin pour une préforme fibreuse, une aube, une soufflante et une turbomachine qui soient dépourvus, au moins en partie, des inconvénients inhérents aux techniques connues précitées.

### PRESENTATION DE L'INVENTION

Le présent exposé concerne une préforme fibreuse pour une aube de turbomachine, comprenant une structure fibreuse principale obtenue par tissage tridimensionnel monobloc, ladite première structure principale comprenant un premier tronçon longitudinal, apte à former un pied d'aube, un deuxième tronçon longitudinal, prolongeant le premier tronçon longitudinal, apte à former une partie de pale, au moins un tronçon transversal, s'étendant transversalement depuis la jonction entre les premier et deuxième tronçons longitudinaux, apte à former une languette pour une plateforme, dans laquelle le tronçon transversal s'étend axialement sur une longueur inférieure à 30% de la longueur de la jonction entre les premier et deuxième tronçons longitudinaux. En particulier, il est possible de considérer que dans une configuration, un premier tronçon transversal s'étend transversalement depuis la jonction entre les premier et deuxième tronçons longitudinaux, et est apte à former une première languette pour une première plateforme. Dans une telle configuration, le premier tronçon transversal s'étend axialement sur une longueur inférieure à 30%, de préférence inférieure à 15%, de la longueur de la jonction entre les premier et deuxième tronçons longitudinaux.

Dans le présent exposé, les termes « longitudinal », « transversal », « inférieur », « supérieur » et leurs dérivés sont définis par rapport à la direction principale de l'aube ; les termes « axial », « radial », « tangentiel », « intérieur », « extérieur » et leurs dérivés sont quant à eux définis par rapport à l'axe principal de la turbomachine. En outre, les termes « amont » et « aval » sont utilisés ici en référence au sens de l'avancement du tissage (flèches T dans les figures).

Grâce à cette préforme, il est possible de concevoir de manière monobloc une aube composée d'un pied d'aube, d'une partie de pale et d'une plate-forme : cette conception monobloc permet de réduire fortement la masse de l'aube.

En outre, grâce à une telle préforme fibreuse, on obtient un bon compromis entre la liberté de conception laissée pour le dessin de l'aube et de la partie de pale notamment, et la bonne tenue mécanique des plateformes vis-à-vis du corps de l'aube.

En effet, dans une telle configuration, la contrainte de conception visant à permettre la sortie d'un nombre suffisant de couches de fils pour réaliser la languette transversale pour plateforme ne pèse que sur une zone réduite de la partie de pale limitée au maximum à 30%, voire 15%, de la longueur axiale de la partie de pale.

En outre, cette longueur du tronçon transversal est suffisamment courte pour pouvoir choisir la zone de la partie de pale la plus adaptée pour réaliser les sorties de couches nécessaires : il est ainsi possible de minimiser leur impact sur la conception de la partie de pale.

Par ailleurs, puisque cette languette est tissée de manière conjointe avec le corps de l'aube, elle forme un appui solidement connecté au corps de l'aube, ce qui renforce la tenue mécanique d'une plateforme rapportée sur une telle languette.

Dans certains modes de réalisation, la structure fibreuse principale comprend une pluralité de tronçons transversaux s'étendant transversalement dans le même sens depuis la jonction entre les premier et deuxième tronçons longitudinaux, aptes à former des languettes pour une même plateforme, dans laquelle lesdits tronçons transversaux sont situés à distance les uns des autres. En particulier, il est possible de considérer que dans une configuration, la structure fibreuse principale comprend un deuxième tronçon transversal s'étendant transversalement depuis la jonction entre les premier et deuxième tronçons longitudinaux dans le même sens que le premier tronçon transversal, apte à former une deuxième languette pour la première plateforme, dans laquelle le deuxième tronçon transversal est situé à distance du premier tronçon transversal. On crée ainsi deux supports distincts entre lesquels, ou à cheval sur lesquels, peut être rapportée une bande formant plateforme, ce qui renforce la tenue mécanique de la plateforme finale.

Par « à distance du premier tronçon transversal », on entend qu'un espace est laissé axialement entre les premier et deuxième tronçons transversaux.

Dans certains modes de réalisation, cet espace axial est au moins égal à 15%, de préférence 30%, de la longueur de la jonction entre les premier et deuxième tronçons longitudinaux.

Dans certains modes de réalisation, la structure fibreuse principale comprend en outre au moins un tronçon transversal supplémentaire s'étendant transversalement depuis la jonction entre les premier et deuxième tronçons longitudinaux, dans le sens opposé d'au moins un tronçon transversal, apte à former une languette pour une deuxième plate-forme. En particulier, il est possible de considérer que dans une configuration, la structure fibreuse principale comprend un troisième tronçon transversal, s'étendant transversalement depuis la jonction entre les premier et deuxième tronçons longitudinaux, dans le sens opposé du premier tronçon transversal, apte à former une première languette pour une deuxième plate-forme Un tel troisième tronçon transversal peut se concevoir même en l'absence d'un deuxième tronçon transversal. Il permet de mettre en place une seconde plateforme du côté opposé à la première plateforme. Ainsi, dans une pluralité de tronçons transversaux, certains peuvent s'étendre dans un sens déterminé, par exemple côté intrados, et d'autres peuvent s'étendre dans le sens opposé au sens déterminé, par exemple côté extrados, pour des plates-formes respectivement côté intrados et extrados.

Dans certains modes de réalisation, le troisième tronçon transversal s'étend dans le prolongement du premier tronçon transversal.

Dans certains modes de réalisation, la structure fibreuse principale comprend en outre un quatrième tronçon transversal, s'étendant transversalement depuis la jonction entre les premier et deuxième tronçons longitudinaux dans le sens opposé du premier tronçon transversal, apte à former une deuxième languette pour la deuxième plate-forme, dans laquelle le quatrième tronçon transversal s'étend axialement sur une longueur inférieure à 30%, de préférence inférieure à 15%, de la longueur de la jonction entre les premier et deuxième tronçons longitudinaux, et dans laquelle le quatrième tronçon transversal est situé à distance du troisième tronçon transversal.

Dans certains modes de réalisation, le quatrième tronçon transversal s'étend dans le prolongement du deuxième tronçon transversal.

Les troisième et quatrième tronçons transversaux peuvent partager les mêmes caractéristiques que les premier et deuxième tronçons transversaux, respectivement.

Dans certains modes de réalisation, au moins un tronçon transversal s'étend axialement depuis l'extrémité avant de la jonction entre les premier et deuxième tronçons longitudinaux. D'une part, ceci réduit l'impact du tronçon transversal sur la stratégie de tissage et donc sur le dessin de la partie de pale. En effet, la transition d'épaisseur entre le pied d'aube et la partie de pale est naturellement très importante au niveau du bord d'attaque : dès lors, de nombreuses couches sont naturellement sorties à cet endroit et peuvent être utilisées pour tisser le tronçon transversal. D'autre part, la mise en place de la bande formant plateforme est facilitée, ledit tronçon transversal pouvant recevoir l'extrémité de cette bande.

Dans certains modes de réalisation, au moins un tronçon transversal s'étend axialement depuis l'extrémité arrière de la jonction entre les premier et deuxième tronçons longitudinaux. D'une part, ceci réduit l'impact du tronçon transversal sur la stratégie de tissage et donc sur le dessin de la partie de pale. En effet, l'épaisseur du pied d'aube est généralement assez faible au niveau du bord de fuite : il peut donc être artificiellement épaissi localement afin de permettre la sortie d'un nombre de couches de fils suffisant pour tisser le tronçon transversal avec un impact minimum sur le dessin de la partie de pale. D'autre part, la mise en place de la bande formant plateforme est facilitée, ledit tronçon transversal pouvant recevoir l'extrémité de cette bande.

Dans certains modes de réalisation, au moins un tronçon transversal est formé par au moins une partie d'un pan libre, ledit pan libre et ledit deuxième tronçon longitudinal étant tissés conjointement de manière déliée, ladite déliaison prenant naissance à la jonction entre les premier et deuxième tronçons longitudinaux.

Une telle déliaison offre l'avantage de tisser le pan libre correspondant au tronçon transversal dans la continuité du premier tronçon longitudinal, le rattachant ainsi structurellement à ce dernier, qui formera le pied d'aube, support de l'aube dans son ensemble, tout en prélevant de l'épaisseur en aval sur le deuxième tronçon longitudinal, qui formera la partie de pale, et qui nécessite donc d'être plus fine. Une telle frontière entre les premier et deuxième tronçons longitudinaux permet ainsi de dissocier le tissage de ce qui deviendra la partie structurale d'une part et la partie aérodynamique d'autre part : la transition d'épaisseur nécessaire entre ces deux parties est ici largement facilitée dans la mesure où la séparation du pan libre emporte déjà une part importante de cette épaisseur.

Dans certains modes de réalisation, le premier tronçon transversal est formé par au moins une partie d'un premier pan libre, ledit premier pan libre et ledit deuxième tronçon longitudinal étant tissés conjointement de manière déliée, ladite déliaison prenant naissance à la jonction entre les premier et deuxième tronçons longitudinaux.

Dans certains modes de réalisation, le deuxième tronçon transversal est formé par au moins une partie d'un deuxième pan libre, ledit deuxième pan libre et ledit deuxième tronçon longitudinal étant tissés conjointement de manière déliée, ladite déliaison prenant naissance à la jonction entre les premier et deuxième tronçons longitudinaux.

Dans certains modes de réalisation, le troisième tronçon transversal est formé par au moins une partie d'un troisième pan libre, ledit troisième pan libre et ledit deuxième tronçon longitudinal étant tissés conjointement de manière déliée, ladite déliaison prenant naissance à la jonction entre les premier et deuxième tronçons longitudinaux.

Dans certains modes de réalisation, le quatrième tronçon transversal est formé par au moins une partie d'un quatrième pan libre, ledit quatrième pan libre et ledit deuxième tronçon longitudinal étant tissés conjointement de manière déliée, ladite déliaison prenant naissance à la jonction entre les premier et deuxième tronçons longitudinaux.

Dans certains modes de réalisation, les premier et deuxième pans libres sont distincts et séparés axialement par au moins un groupe de fils non tissés.

Dans certains modes de réalisation, les troisième et quatrième pans libres sont distincts et séparés axialement par au moins un groupe de fils non tissés.

Dans certains modes de réalisation, la préforme comprend en outre au moins une bande fibreuse, par exemple une première bande fibreuse, tissée indépendamment de la structure fibreuse principale, dont la longueur est sensiblement égale à la longueur de la jonction entre les premier et deuxième tronçons longitudinaux, apte à former une première plateforme.

Dans certains modes de réalisation, la préforme comprend en outre une deuxième bande fibreuse, tissée indépendamment de la structure fibreuse principale, dont la longueur est sensiblement égale à la longueur de la jonction entre les premier et deuxième tronçons longitudinaux, apte à former une deuxième plateforme.

Dans certains modes de réalisation, la bande fibreuse est rapportée sur au moins un tronçon transversal de la structure fibreuse principale. En particulier, la première bande fibreuse est rapportée sur le premier tronçon transversal et/ou le deuxième tronçon transversal de la structure fibreuse principale.

Dans certains modes de réalisation, la deuxième bande fibreuse est rapportée sur le troisième tronçon transversal et/ou le quatrième tronçon transversal de la structure fibreuse principale.

Dans certains modes de réalisation, au moins une bande fibreuse, et de préférence chaque bande fibreuse, est rapportée sur la structure fibreuse principale par collage, couture ou co-injection.

Dans certains modes de réalisation, au moins une bande fibreuse est rapportée sur un tronçon transversal en s'appliquant contre la surface inférieure dudit tronçon transversal. Cette configuration permet une meilleure tenue mécanique face aux efforts centrifuges s'appliquant sur les plateformes en cours de fonctionnement de la turbomachine.

Dans certains modes de réalisation, la surface supérieure d'au moins une bande fibreuse affleure la surface supérieure d'au moins un tronçon transversal. De cette manière, la surface supérieure de la plateforme finale est plane et régulière, ce qui assure de bonnes propriétés aérodynamiques.

Dans certains modes de réalisation, au moins une bande fibreuse comporte une encoche dont la forme correspond sensiblement à la forme d'un tronçon transversal.

Dans certains modes de réalisation, au moins un quelconque des tronçons transversaux s'étend axialement sur une longueur inférieure à 30% de la longueur de la jonction entre les premier et deuxième tronçons longitudinaux. En particulier, chaque tronçon transversal peut s'étendre s'étend axialement sur une longueur inférieure à 30% de la longueur de la jonction entre les premier et deuxième tronçons longitudinaux.

Dans certains modes de réalisation, au moins un quelconque des tronçons transversaux s'étend axialement sur une longueur inférieure à 15% de la longueur de la jonction entre les premier et deuxième tronçons longitudinaux. En particulier, chaque tronçon transversal peut s'étendre axialement sur une longueur inférieure à 15% de la longueur de la jonction entre les premier et deuxième tronçons longitudinaux.

Dans certains modes de réalisation, le nombre de couches de fils, et donc l'épaisseur, du deuxième tronçon longitudinal est évolutif. Ceci permet d'affiner la partie de pale afin d'améliorer ses performances aérodynamiques.

Dans certains modes de réalisation, les fils utilisés pour le tissage de la préforme sont des fibres de carbone. Il peut toutefois s'agir de n'importe quel autre type de fil, par exemple des fibres de verre ou de kevlar.

Dans certains modes de réalisation, l'armure utilisée pour le tissage tridimensionnel de la préforme peut être du type interlock 3D. Toutefois, le tissage des surfaces externes de la préforme peut être essentiellement bidimensionnel, du type satin par exemple.

Le présent exposé concerne également une aube pour turbomachine comprenant un pied d'aube, une partie de pale, et une plate-forme s'étendant transversalement à la partie de pale au niveau de la jonction entre le pied d'aube et la partie de pale, ladite aube étant réalisée de manière monobloc en matériau composite au moyen d'une préforme fibreuse selon l'un quelconque des modes de réalisation précédents, ladite préforme ayant été mise en forme dans un moule et noyée dans une matrice.

Grâce à cette géométrie monobloc intégrant au moins un pied d'aube, une partie de pale et une plate-forme, on obtient les avantages décrits plus haut en termes de tenue mécanique, masse, coût, performances et facilité de mise en œuvre.

Dans certains modes de réalisation, la matrice est de type organique. Il peut notamment s'agir d'une résine époxy.

Dans d'autres modes de réalisation, la matrice est du type céramique.

Le présent exposé concerne également une soufflante pour turbomachine comprenant une pluralité d'aubes selon l'un des modes de réalisation décrits ci-dessus.

Le présent exposé concerne enfin une turbomachine comprenant au moins une aube ou une soufflante selon l'un quelconque des modes de réalisations précédents.

Les caractéristiques et avantages précités, ainsi que d'autres, apparaîtront à la lecture de la description détaillée qui suit, d'exemples de réalisation de la préforme et de l'aube proposées. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est un plan en coupe d'une turbomachine selon l'exposé.
La FIG 2 est une vue en perspective d'une aube selon l'exposé.
La FIG 3 est une vue en perspective d'une préforme permettant d'obtenir une telle aube, avant assemblage.
Les FIG 4A et 4B illustrent de manière schématique la structure fibreuse principale de cette préforme.
La FIG 5 illustre de manière simplifiée une déliaison.
La FIG 6 est une vue en perspective de la préforme assemblée et mise en forme.

### DESCRIPTION DETAILLEE D'EXEMPLES DE REALISATION

Afin de rendre plus concrète l'invention, un exemple de réalisation est décrit en détail ci-après, en référence aux dessins annexés. Il est rappelé que l'invention ne se limite pas à cet exemple.

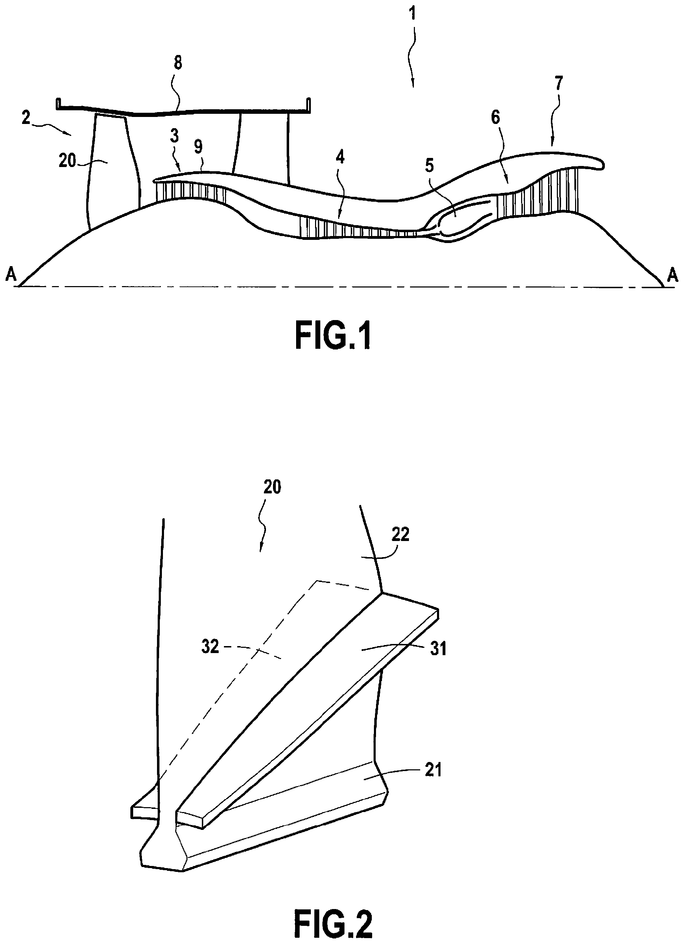

La FIG 1 représente, en coupe selon un plan vertical passant par son axe principal A, un turboréacteur à double flux 1 selon l'exposé. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7. Dans sa partie amont, ce turboréacteur 1 comprend un carter extérieur 8 et un carter intérieur 9 définissant deux veines concentriques primaire et secondaire.

La FIG 2 représente en perspective, de manière schématique, une aube 20 de soufflante 2. Une telle aube 20 comporte un pied d'aube 21 et une partie de pale 22. La partie de pale 22 assure principalement la fonction aérodynamique de l'aube 20 tandis que le pied d'aube 21 assure principalement la fixation et la tenue mécanique de l'aube 20.

Le pied d'aube 21 comporte un profil en queue d'aronde permettant sa fixation dans une cavité d'un disque de soufflante.

L'aube 20 comporte en outre des plateformes intrados 31 et extrados 32 s'étendant sensiblement orthogonalement à la partie de pale 22, de part et d'autre de cette dernière, au niveau de la frontière entre le pied d'aube 21 et la partie de pale 22. Ces plates-formes 31, 32 permettent de constituer une paroi intérieure de veine lisse et aérodynamique et assurent la transition de diamètre entre l'amont et l'aval de la soufflante 2.

Dans cet exemple de réalisation, l'aube 20 est une aube de soufflante comportant un pied 21 en queue d'aronde et deux plateformes 31, 32. Toutefois, dans d'autres exemples, il pourrait s'agir d'un autre type d'aube, fixe ou mobile, de compresseur, éventuellement de turbine ou encore de carter intermédiaire ou de carter arrière, pour ne citer que ces exemples. Elle pourrait ainsi comporter également des plateformes supérieures ou encore des brides de fixation en pied ou en tête d'aube.

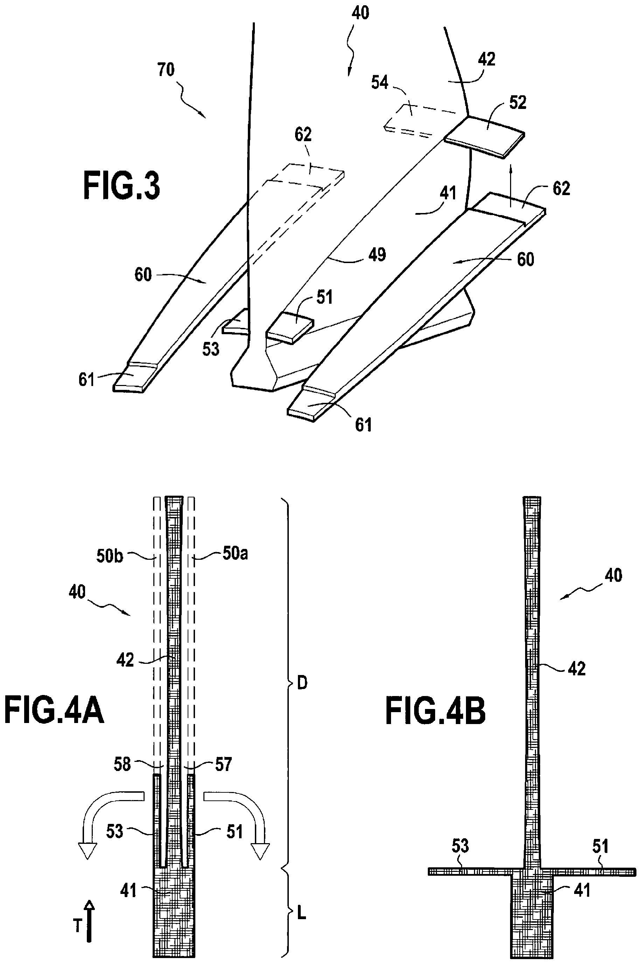

La FIG 3 représente la préforme 70 permettant de réaliser cet exemple d'aube 20. Elle comprend une structure fibreuse principale 40 tissée tridimensionnellement et deux bandes fibreuses 60 tissées également tridimensionnellement mais indépendamment de la structure fibreuse principale 40.

La structure fibreuse principale 40 comprend un premier tronçon longitudinal 41 et un deuxième tronçon longitudinal 42 délimités par une frontière 49. La structure fibreuse principale 40 comprend également quatre tronçons transversaux 51, 52, 53 et 54 s'étendant transversalement depuis cette frontière 49 formant jonction entre les premier et deuxième tronçons longitudinaux 41, 42.

Un premier tronçon transversal 51 s'étend du côté intrados à partir de l'extrémité avant de la structure fibreuse principale 40, c'est-à-dire depuis le bord d'attaque de l'aube 20. Sa longueur axiale, c'est-à-dire sa longueur le long de la frontière 49, est environ égale à 20% de la longueur de cette frontière 49.

Un deuxième tronçon transversal 52 s'étend également du côté intrados mais à partir cette fois de l'extrémité arrière de la structure fibreuse principale 40, c'est-à-dire depuis le bord de fuite de l'aube 20. Sa longueur axiale, c'est-à-dire sa longueur le long de la frontière 49, est environ également à 20% de la longueur de cette frontière 49.

Un troisième tronçon transversal 53 s'étend du côté extrados à l'opposé et dans le prolongement du premier tronçon transversal 51, c'est-à-dire depuis l'extrémité avant de la structure fibreuse principale 40. Sa longueur axiale correspond sensiblement à celle du premier tronçon transversal 51.

Un quatrième tronçon transversal 54 s'étend également du côté extrados à l'opposé et dans le prolongement du deuxième tronçon transversal 51, c'est-à-dire depuis l'extrémité arrière de la structure fibreuse principale 40. Sa longueur axiale correspond sensiblement à celle du deuxième tronçon transversal 51.

Le tissage de cette préforme fibreuse principale 40 va maintenant être expliqué à l'aide des FIG 4A et 4B. Ces deux figures se placent en coupe longitudinale au niveau des premier et troisième tronçons transversaux 51, 53, c'est-à-dire à proximité du bord avant de la structure fibreuse principale 40. Toutefois, le tissage est tout à fait analogue au niveau des deuxième et quatrième tronçons transversaux 52 et 54.

La FIG 4A représente la structure fibreuse principale 40 tissée tridimensionnellement. La FIG 4B représente la même structure fibreuse principale 40 après sa mise en forme. Cette structure fibreuse principale 40 va être décrite d'amont en aval dans la direction T de tissage, c'est-à-dire du bas vers le haut des figures. Il va toutefois de soi que le tissage pourrait être réalisé à partir de l'autre extrémité et dans l'autre sens.

Dans cet exemple de réalisation, la structure fibreuse principale 40 est tissée tridimensionnellement en fibres de carbone selon une armure interlock 3D.

A l'extrémité amont, le tissage débute par une zone de liaison L dans laquelle est tissé le premier tronçon longitudinal 41 qui formera le pied 21 de l'aube 20.

En aval de cette zone de liaison L, débute une zone de déliaison D dans laquelle un premier pan libre 50a, un deuxième tronçon longitudinal 42, et un deuxième pan libre 50b sont tissés conjointement de manière déliée avec des plans de déliaison respectifs 61 et 62.

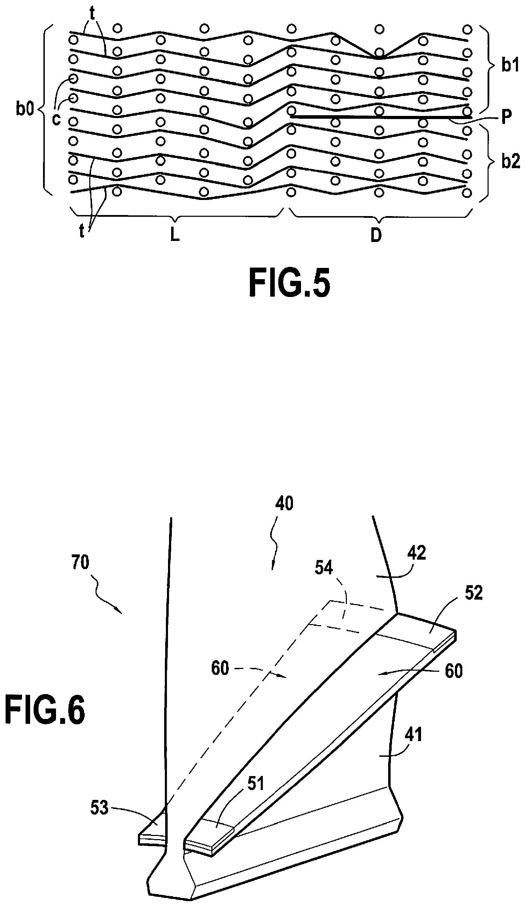

Des méthodes de tissage permettant une telle déliaison sont désormais bien connues dans le domaine du tissage 3D. A titre d'illustration, la FIG 5 schématise de manière simplifiée un tel tissage délié. Dans la zone de liaison L, toutes les couches de fils de chaîne c (orthogonaux au plan de la figure) sont solidarisées les unes avec les autres par des fils de trame t (naviguant dans le plan de la figure), formant ainsi une bande unique b0. A l'inverse, dans la zone de déliaison D, deux bandes b1 et b2 sont tissées conjointement mais de manière déliée, c'est-à-dire avec des fils de trame t indépendants pour chaque bande b1, b2, de sorte qu'un plan de déliaison P est ménagé entre les deux bandes b1 et b2. Naturellement, une telle liaison peut être réalisée aussi bien dans le sens chaîne que dans le sens trame, donc aussi bien sur des torons de chaîne que des torons de trame.

En outre, au sein de cette zone de déliaison D, des sorties de couches sont réalisées progressivement le long du tissage T entre le deuxième tronçon longitudinal 42 et chacun des pans libres 50a, 50b.

Des méthodes de tissage permettant de telles sorties de couches sont désormais bien connues dans le domaine du tissage 3D. Concrètement, les fils de trame sont amenés à laisser libres certains fils de chaîne, appelés « flottés », qui, détachés de tout fil de trame, « flottent » et peuvent ainsi être éliminés ultérieurement par rasage : des couches entières ou partielles peuvent ainsi être éliminées, ce qui permet de réduire l'épaisseur de certains zones de la préforme. Dans cet exemple de réalisation, cela permet d'affiner le deuxième tronçon longitudinal 42 et donc la partie de pale 22 qui en est issue.

Il faut noter à ce sujet que ces sorties de couches sont réalisées ici au sein même de la structure fibreuse principale 40 en cours de tissage : les fils de chaîne flottés sont ainsi enfermés, et donc cachés, entre le deuxième tronçon longitudinal 42 d'une part et le pan libre 50a ou 50b d'autre part.

Une fois le tissage terminé, les pans libres 50a et 50b sont découpés de manière à former respectivement les premier et troisième tronçons transversaux 51, 53. Ces derniers sont alors rabattus vers l'extérieur selon les flèches de manière à prendre leurs positions transversales finales : ils formeront respectivement des languettes de support pour les plateformes intrados 31 et extrados 33.

Une fois les pans libres 50a et 50b découpés, les flottés résidant en surface du deuxième tronçon longitudinal 42 sont désormais accessibles et peuvent être rasés.

Par ailleurs, de manière indépendante, les bandes fibreuses 60 sont tissées, soit tridimensionnellement comme dans cet exemple, soit bidimentionnellement. Elles s'étendent chacune sur une longueur correspond à la longueur de la frontière 49 séparant les premier et deuxième tronçons longitudinaux 41, 42.

La surface supérieure de chaque bande fibreuse 60 comporte, à son extrémité avant, une première encoche 61 dont la forme correspond sensiblement à la forme du premier tronçon transversal 51, respectivement du troisième tronçon transversal 53. Autrement dit, la profondeur de l'encoche 61 correspond à l'épaisseur du premier tronçon transversal 51, respectivement troisième tronçon transversal 53 ; la longueur axiale de l'encoche 61 correspond à la longueur axiale du premier tronçon transversal 51, respectivement troisième tronçon transversal 53 ; et la largeur transversale de l'encoche 61 correspond à la largeur transversale du premier tronçon transversal 51, respectivement troisième tronçon transversal 53.

Dans le présent exemple, la première encoche 61 s'étend sur toute la largeur de la bande fibreuse 60 considérée. Ainsi, la bande fibreuse 60 possède à son extrémité avant une largeur correspondant à la largeur transversale du premier tronçon transversal 51, respectivement du troisième tronçon transversal 53.

De manière analogue, la surface supérieure de chaque bande fibreuse 60 comporte également, à son extrémité arrière, une deuxième encoche 62 dont la forme correspond sensiblement à la forme du deuxième tronçon transversal 52, respectivement du quatrième tronçon transversal 54.

Dans le présent exemple, la deuxième encoche 62 s'étend également sur toute la largeur de la bande fibreuse 60 considérée. Ainsi, la bande fibreuse 60 possède à son extrémité arrière une largeur correspondant à la largeur transversale du deuxième tronçon transversal 52, respectivement du quatrième tronçon transversal 54.

Chaque bande fibreuse 60 est alors rapportée sous un couple de tronçons transversaux 51, 52 et 53, 54, tous les tronçons transversaux 51-54 étant alors reçus dans les encoches 61, 62. En conséquence, la surface supérieure de chaque bande fibreuse 60 affleure la surface supérieure des tronçons transversaux 51-54.

La préforme 70 ainsi constituée, représentée sur la FIG 6, peut être humidifiée pour l'assouplir et permettre un décadrage plus aisé des fibres. Elle est alors introduite dans un moule de formage dont l'espace intérieur est ajusté à la géométrie recherchée pour la préforme 70.

On sèche ensuite la préforme 70 afin que celle-ci se raidisse, bloquant ainsi la géométrie imposée lors de la mise en forme. La préforme 70 est enfin disposée dans un moule d'injection, aux dimensions de l'aube finale souhaitée 20, dans lequel on injecte une matrice, ici une résine epoxy. Une telle injection peut par exemple être réalisée par le procédé connu RTM (« resin transfer molding »). A l'issue de cette étape, on obtient alors une aube 20 en matériau composite composée d'une préforme 70 tissée en fibres de carbone noyée dans une matrice époxy. Des étapes d'usinage peuvent éventuellement compléter ce procédé pour finaliser l'aube 20.

Dans le présent exemple, chaque bande fibreuse 60 est collée sous les tronçons transversaux 51-54. Toutefois, dans d'autres exemples, les bandes fibreuses 60 pourraient simplement être mise en place dans le moule d'injection en même temps que la structure fibreuse principale 40, la solidarisation des bandes fibreuses 60 sur la structure fibreuse principale 40 étant obtenue grâce à cette co-injection au moment de la solidification de la matrice.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Préforme fibreuse pour une aube de turbomachine, comprenant une structure fibreuse principale (40) obtenue par tissage tridimensionnel monobloc, ladite première structure principale (40) comprenant
un premier tronçon longitudinal (41), apte à former un pied d'aube (21),
un deuxième tronçon longitudinal (42), prolongeant le premier tronçon longitudinal (41), apte à former une partie de pale (22), et
au moins un tronçon transversal (51), s'étendant transversalement depuis la jonction (49) entre les premier et deuxième tronçons longitudinaux (41, 42), apte à former une languette pour une plateforme (31), **caractérisée en ce que** le tronçon transversal (51) s'étend axialement sur une longueur inférieure à 30% de la longueur de la jonction (49) entre les premier et deuxième tronçons longitudinaux (41, 42).

2. Préforme selon la revendication 1, dans laquelle la structure fibreuse principale (40) comprend une pluralité de tronçons transversaux (51, 52) s'étendant transversalement dans le même sens depuis la jonction (49) entre les premier et deuxième tronçons longitudinaux (41, 42), aptes à former des languettes pour une même plateforme (31),
dans laquelle lesdits tronçons transversaux (51, 52) sont situés à distance les uns des autres.

3. Préforme selon la revendication 1 ou 2, dans laquelle la structure fibreuse principale (40) comprend en outre au moins un tronçon transversal supplémentaire (53) s'étendant transversalement depuis la jonction (49) entre les premier et deuxième tronçons longitudinaux (41, 42), dans le sens opposé d'au moins un tronçon transversal, apte à former une languette pour une deuxième plate-forme (32).

4. Préforme selon l'une quelconque des revendications 1 à 3, dans laquelle au moins un tronçon transversal (51, 53) s'étend axialement depuis l'extrémité avant de la jonction (49) entre les premier et deuxième tronçons longitudinaux (41, 42).

5. Préforme selon l'une quelconque des revendications 1 à 4, dans laquelle au moins un tronçon transversal (52, 54) s'étend axialement depuis l'extrémité arrière de la jonction (49) entre les premier et deuxième tronçons longitudinaux (41, 42).

6. Préforme selon l'une quelconque des revendications 1 à 5, dans laquelle au moins un tronçon transversal (51, 52, 53, 54) est formé par au moins une partie d'un pan libre (50a), ledit pan libre (50a) et ledit deuxième tronçon longitudinal (42) étant tissés conjointement de manière déliée, ladite déliaison (D) prenant naissance à la jonction (49) entre les premier et deuxième tronçons longitudinaux (41, 42).

7. Préforme selon l'une quelconque des revendications 1 à 6, comprenant en outre au moins une bande fibreuse (60), tissée indépendamment de la structure fibreuse principale (40), dont la longueur est sensiblement égale à la longueur de la jonction (49) entre les premier et deuxième tronçons longitudinaux (41, 42), apte à former une plateforme (31).

8. Préforme selon la revendication 7, dans laquelle la bande fibreuse (60) est rapportée sur au moins un tronçon transversal (51, 52) de la structure fibreuse principale (40), en s'appliquant contre la surface inférieure dudit tronçon transversal (51, 52).

9. Préforme selon la revendication 7 ou 8, dans laquelle la surface supérieure de la bande fibreuse (60) affleure la surface supérieure d'au moins un tronçon transversal (51, 52).

10. Préforme selon l'une quelconque des revendications précédentes, dans laquelle dans laquelle au moins un tronçon transversal (51, 52, 53, 54) s'étend axialement sur une longueur inférieure à 15% de la longueur de la jonction (49) entre les premier et deuxième tronçons longitudinaux (41, 42).

11. Aube pour turbomachine, comprenant
un pied d'aube (21),
une partie de pale (22), et
une plate-forme (31) s'étendant transversalement à la partie de pale (22) au niveau de la jonction (49) entre le pied d'aube (21) et la partie de pale (22),
**caractérisé en ce que** ladite aube (20) est réalisée de manière monobloc en matériau composite au moyen d'une préforme fibreuse (70) selon l'une quelconque des revendications 1 à 10, ladite préforme (70) ayant été mise en forme dans un moule et noyée dans une matrice, de préférence de type organique.

12. Soufflante pour turbomachine, **caractérisée en ce qu'**elle comprend une pluralité d'aubes (2) selon la revendication 11.

13. Turbomachine, **caractérisée en ce qu'**elle comprend au moins une aube (20) selon la revendication 11 ou une soufflante (2) selon la revendication 12.

## Patentansprüche

1. Faservorform für eine Schaufel einer Turbomaschine, umfassend eine Hauptfaserstruktur (40), erhalten durch einteiliges dreidimensionales Wirken, wobei die erste Hauptstruktur (40) umfasst
einen ersten Längsabschnitt (41), der imstande ist, einen Schaufelfuß (21) zu bilden,
einen zweiten, den ersten Längsabschnitt (41) verlängernden Längsabschnitt (42), der imstande ist, einen Blattteil (22) zu bilden, und
mindestens einen transversalen Abschnitt (51), der sich transversal ab der Verbindung (49) zwischen dem ersten und zweiten Längsabschnitt (41, 42) erstreckt, der imstande ist, eine Zunge für eine Plattform (31) zu bilden,
**dadurch gekennzeichnet, dass** sich der transversale Abschnitt (51) axial über eine Länge von unter 30 % der Länge der Verbindung (49) zwischen dem ersten und zweiten Längsabschnitt (41, 42) erstreckt.

2. Vorform nach Anspruch 1, wobei die Hauptfaserstruktur (40) eine Vielzahl transversaler Abschnitte (51, 52) umfasst, die sich transversal in derselben Richtung ab der Verbindung (49) zwischen dem ersten und zweiten Längsabschnitt (41, 42) erstrecken, die imstande sind, Zungen für dieselbe Plattform (31) zu bilden,
wobei sich die transversalen Abschnitte (51, 52) entfernt voneinander befinden.

3. Vorform nach Anspruch 1 oder 2, wobei die Hauptfaserstruktur (40) ferner mindestens einen zusätzlichen transversalen Abschnitt (53) umfasst, der sich transversal ab der Verbindung (49) zwischen dem ersten und zweiten Längsabschnitt (41, 42) in entgegengesetzter Richtung von mindestens einem transversalen Abschnitt erstreckt, der imstande ist, eine Zunge für eine zweite Plattform (32) zu bilden.

4. Vorform nach einem der Ansprüche 1 bis 3, wobei sich mindestens ein transversaler Abschnitt (51, 53) axial ab dem vorderen Ende der Verbindung (49) zwischen dem ersten und zweiten Längsabschnitt (41, 42) erstreckt.

5. Vorform nach einem der Ansprüche 1 bis 4, wobei sich mindestens ein transversaler Abschnitt (52, 54) axial ab dem hinteren Ende der Verbindung (49) zwischen dem ersten und zweiten Längsabschnitt (41, 42) erstreckt.

6. Vorform nach einem der Ansprüche 1 bis 5, wobei mindestens ein transversaler Abschnitt (51, 52, 53, 54) von mindestens einem Teil einer freien Kante (50a) gebildet ist, wobei die freie Kante (50a) und der zweite Längsabschnitt (42) zusammen entbunden gewirkt sind, wobei die Entbindung (D) an der Verbindung (49) zwischen dem ersten und zweiten Längsabschnitt (41, 42) einsetzt.

7. Vorform nach einem der Ansprüche 1 bis 6, umfassend ferner mindestens ein Faserband (60), das unabhängig von der Hauptfaserstruktur (40) gewirkt ist, dessen Länge etwa gleich der Länge der Verbindung (49) zwischen dem ersten und zweiten Längsabschnitt (41, 42) ist, das imstande ist, eine Plattform (31) zu bilden.

8. Vorform nach Anspruch 7, wobei das Faserband (60) auf mindestens einem transversalen Abschnitt (51, 52) der Hauptfaserstruktur (40) angebracht ist, indem es an der unteren Fläche des transversalen Abschnitts (51, 52) anliegt.

9. Vorform nach Anspruch 7 oder 8, wobei die obere Fläche des Faserbands (60) mit der oberen Fläche von mindestens einem transversalen Abschnitt (51, 52) bündig ist.

10. Vorform nach einem der vorangehenden Ansprüche, wobei sich mindestens ein transversaler Abschnitt (51, 52, 53, 54) axial über eine Länge von unter 15 % der Länge der Verbindung (49) zwischen dem ersten und zweiten Längsabschnitt (41, 42) erstreckt.

11. Schaufel für Turbomaschine, umfassend
einen Schaufelfuß (21),
einen Blattteil (22) und
eine Plattform (31), die sich transversal zum Blattteil (22) im Bereich der Verbindung (49) zwischen dem Schaufelfuß (21) und dem Blattteil (22) erstreckt,
**dadurch gekennzeichnet, dass** die Schaufel (20) einteilig aus Verbundmaterial mittels einer Faservorform (70) nach einem der Ansprüche 1 bis 10 hergestellt ist, wobei die Vorform (70) in einer Form geformt und in eine vorzugsweise organische Matrix getaucht wurde.

12. Bläser für Turbomaschine, **dadurch gekennzeichnet, dass** er eine Vielzahl von Schaufeln (2) nach Anspruch 11 umfasst.

13. Turbomaschine, **dadurch gekennzeichnet, dass** sie mindestens eine Schaufel (20) nach Anspruch 11 oder einen Bläser (2) nach Anspruch 12 umfasst.

## Claims

1. A fiber preform for a turbine engine blade, the preform comprising a main fiber structure (40) obtained by a single piece of three-dimensional weaving, said main first structure (40) comprising:
- a first longitudinal segment (41) suitable for forming a blade root (21);
- a second longitudinal segment (42) extending the first longitudinal segment (41) and suitable for forming an airfoil portion (22); and
- at least one transverse segment (51) extending transversely from the junction (49) between the first and second longitudinal segments (41, 42) and suitable for forming a tongue for a platform (31);
**characterized in that** the transverse segment (51) extends axially over a length that is less than 30% of the length of the junction (49) between the first and second longitudinal segments (41, 42).

2. A preform according to claim 1, wherein the main fiber structure (40) includes a plurality of transverse segments (51, 52) extending transversely in the same direction from the junction (49) between the first and second longitudinal segments (41, 42) and suitable for forming tongues for a common platform (31);
wherein said longitudinal segments (51, 52) are spaced apart from one another.

3. A preform according to claim 1 or claim 2, wherein the main fiber structure (40) further includes at least one additional transverse segment (53) extending transversely from the junction (49) between the first and second longitudinal segments (41, 42), in the direction opposite to at least one transverse segment, and suitable for forming a tongue for a second platform (32).

4. A preform according to any one of claims 1 to 3, wherein at least one transverse segment (51, 53) extends axially from the front end of the junction (49) between the first and second longitudinal segments (41, 42).

5. A preform according to any one of claims 1 to 4, wherein at least one transverse segment (52, 54) extends axially from the rear end of the junction (49) between the first and second longitudinal segments (41, 42).

6. A preform according to any one of claims 1 to 5, wherein at least one transverse segment (51, 52, 53, 54) is formed by at least a portion of a free flap (50a), said free flap (50a) and said second longitudinal segment (42) being woven jointly in non-interlinked manner, said non-interlinking (D) starting at the junction (49) between the first and second longitudinal segments (41, 42) .

7. A preform according to any one of claims 1 to 6, further comprising at least one fiber strip (60), that is woven independently of the main fiber structure (40), and that is of width substantially equal to the length of the junction (49) between the first and second longitudinal segments (41, 42), and that is suitable for forming a platform (31).

8. A preform according to claim 7, wherein the fiber strip (60) is fitted to at least one transverse segment (51, 52) of the main fiber structure (40) by being put against the bottom surface of said transverse segment (51, 52) .

9. A preform according to claim 7 or claim 8, wherein the top surface of the fiber strip (60) is flush with the top surface of at least one transverse segment (51, 52).

10. A preform according to any preceding claim, wherein at least one transverse segment (51, 52, 53, 54) extends axially over a length that is less than 15% of the length of the junction (49) between the first and second longitudinal segments (41, 42).

11. A turbine engine blade comprising:
- a blade root (21);
- an airfoil portion (22); and
- a platform (31) extending transversely to the airfoil portion (22) at the level of the junction (49) between the blade root (21) and the airfoil portion (22);
said blade (20) being **characterized in that** it is made as a single piece of composite material by means of a fiber preform (70) according to any one of claims 1 to 10, said preform (70) being shaped in a mold and embedded in a matrix, preferably of organic type.

12. A turbine engine fan, **characterized in that** it comprises a plurality of blades (2) according to claim 11.

13. A turbine engine, **characterized in that** it includes at least one blade (20) according to claim 11 or a fan (2) according to claim 12.
